# FASCICULE DE BREVET EUROPEEN

(11) **EP 1 898 699 B1**
(45) Date de publication et mention de la délivrance du brevet: **10.03.2010**
(21) Numéro de dépôt: 06778594.9
(22) Date de dépôt: 12.06.2006
(51) Int. Cl.: A01L 7/02

(54) **PLAQUE DE FERRURE PERFECTIONNEE POUR PIED FERRE D'ANIMAL**
VERBESSERTE BEFESTIGUNGSPLATTE FÜR EINEN BESCHLAGENEN HUF EINES TIERES
IMPROVED FITTING PLATE FOR AN ANIMAL SHOD HOOF

(30) Priorité: 17.06.2005 FR 0506250
(43) Date de publication de la demande: 19.03.2008
(73) Titulaire: Vaillant, Joseph, 74300 Cluses (FR)
(72) Inventeur: Vaillant, Joseph, 74300 Cluses (FR)
(74) Mandataire: Poncet, Jean-François
(86) Numéro de dépôt international: PCT/FR2006/001346
(87) Numéro de publication internationale: WO 2006/134268

(56) Documents cités:
- DE-C- 38 778
- DE-U1- 29 821 553
- US-A- 2 191 834
- US-A- 4 998 586
- US-A- 5 509 484

## Description

La présente invention concerne une plaque de ferrure pour pied ferré d'animaux, et plus particulièrement pour le sabot d'un cheval, destiné notamment au sport équestre.

Les animaux ferrés et utilisés en épreuve sportive ont leurs pieds ferrés avec des protections métalliques ou synthétiques comprenant une plaque intercalaire placée entre le fer et le sabot et un ou plusieurs produits moulés sur place, comblant l'espace entre la voûte plantaire (appelée sole) et le dessous de la plaque en formant des coussinets afin d'isoler cette zone de toute intrusion de corps étrangers.

Il existe une variété importante de plaques intercalaires (appelée plaque de ferrure). Ces plaques sont toutes destinées à protéger la face plantaire du pied et amortir les chocs qui pourraient endommager les membres du cheval.

Les plaques de ferrure les plus répandues sont réalisées en un seul matériau sur toute leur surface.

Le document DE 298 21 553 U1 décrit quant à lui une plaque de ferrure comportant deux zones, à savoir une zone correspondant à la zone dite des talons du pied et une zone correspondant au reste de la surface du pied. La zone des talons présente une dureté plus élevée que celle de l'autre zone afin de limiter l'usure de la zone des talons.

D'autres plaques de ferrure sont réalisées sous la forme d'un sandwich en plusieurs couches de matériau différent, chaque couche s'étendant sur toute la surface.

Un autre type de plaque de ferrure améliorée, notamment commercialisée sous la marque « Shocktamer ©», est réalisé sous la forme d'une bi-couche réalisée en élastomère de même grade comprenant un circuit destiné normalement à canaliser et évacuer l'énergie résultante du choc global à chaque posé du pied ferré avec le sol.

Toutes les plaques de ferrure ainsi proposées à ce jour ne tiennent pas compte de la répartition des pressions réellement subies sur toute leur surface à chaque posé du pied ferré avec le sol, ni des zones réellement sollicitées au moment de la propulsion du pied du sol.

L'invention se propose de remédier aux inconvénients cités précédemment, et propose donc une plaque de ferrure qui répartisse efficacement les pressions sur toute la surface du pied ferré de l'animal et ce, quel que soit le posé de celui-ci sur le sol et qui sollicite efficacement les différentes zones du pied lors de la phase de propulsion de celui-ci.

A cet effet, l'invention a pour objet une plaque de ferrure, destinée à être fixée entre un fer et le sabot d'un pied d'animal, du type réalisée en au moins un matériau synthétique dont la surface recouvre celle du pied, **caractérisée en ce que** sa surface comprend deux zones de dureté différentes, l'une des zones correspondant à la zone dite « des talons » du pied et l'autre des zones correspondant au reste de la surface du pied en regard et de dureté supérieure à celle de la zone des talons.

D'autres avantages et caractéristiques ressortiront mieux à la lecture de la description détaillée ci-après d'un exemple de réalisation de l'invention faite en référence aux figures.
La figure 1 est une vue en perspective éclatée d'un pied d'un cheval ferré avec une plaque de ferrure conforme à l'invention et réalisée selon un premier mode.

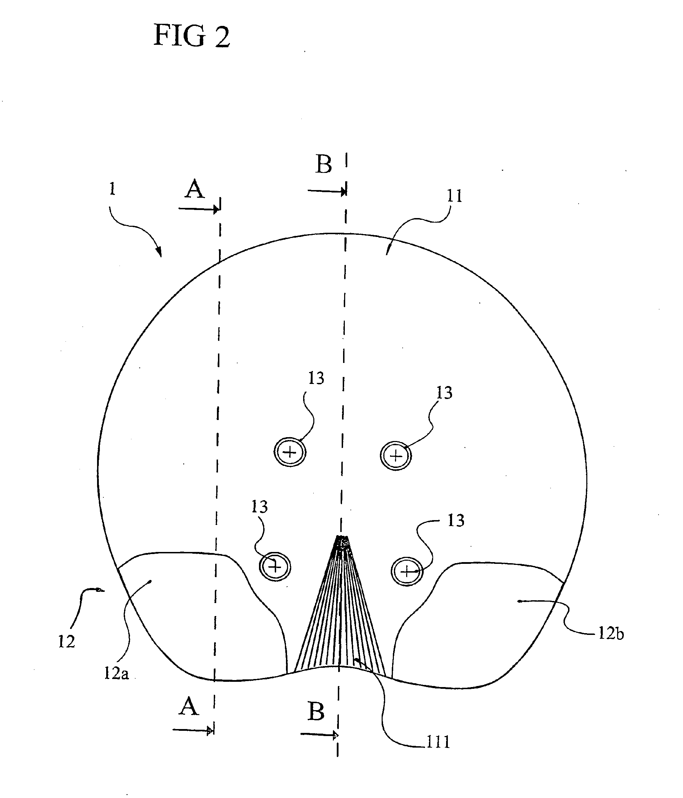

La figure 2 est une vue de dessus d'une plaque de ferrure conforme à l'invention réalisée selon un deuxième mode.
La figure 3 est une vue en coupe de la plaque de ferrure selon la figure 2 selon A-A.
La figure 4 est une vue en coupe de la plaque de ferrure selon la figure 2 selon B-B.

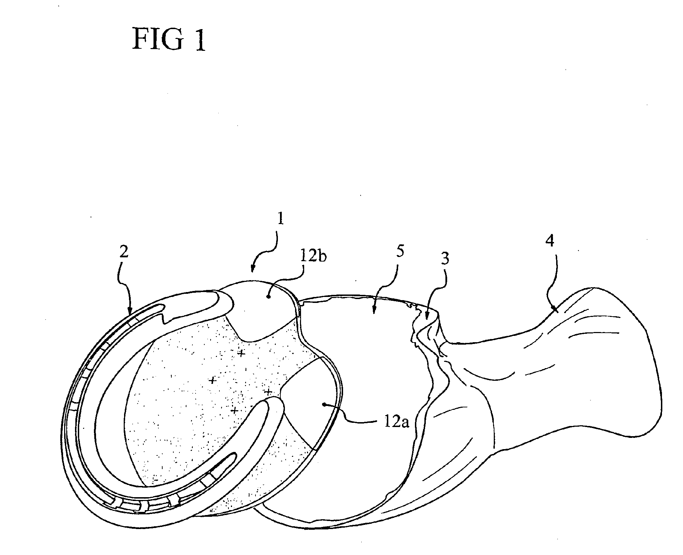

La plaque de ferrure selon l'invention porte la référence générale (1), et est destinée à être fixée entre un fer (2) et le sabot (3) d'un pied (4) d'animal.
ladite plaque (1) est réalisée en au moins un matériau synthétique dont la surface recouvre celle du pied, tel que cela est représenté à la figure 1.

Selon l'invention, la surface (10) de plaque (1) comprend deux zones (11, 12) de dureté différentes, à savoir une première zone correspondant à la zone dite « des talons » (12a, 12b) du pied et une deuxième zone (11) correspondant au reste de la surface du pied. La deuxième zone (11) présente une dureté supérieure à celle de la zone des talons.

On notera que la première zone (12), à savoir celle des talons, est en fait constituée de deux zones élémentaires (12a, 12b) situées à l'arrière, et latéralement de part et d'autre du plan de symétrie générale.

Dans le mode de réalisation illustré et préféré de l'invention, la différence de dureté entre les deux zones (11, 12) est d'au moins 10%.

En d'autres termes, la plaque de ferrure est de construction bi-matière qui permet de remplir des fonctions définies dans des zones distinctes du pied, à savoir :

La zone des talons c'est-à-dire la première zone (12a, 12b) est réalisée avec une matière dont la dureté et la consistance permet d'absorber les chocs dus au posé du pied.

La zone de l'avant du pied, c'est-à-dire la deuxième zone (11) est réalisée avec une matière synthétique qui grâce à sa dureté qui est au moins supérieure de 10% par rapport à cette de la matière des talons, et sa consistance à la dynamique adaptée, permet de restituer une partie de l'énergie pour participer à le relance du mouvement de la propulsion.

La différence de dureté entre les deux matières pourra par exemple être de 25 %.

A titre d'exemple, la dureté de la matière de la première zone (12a, 12b) peut être par exemple comprise entre 35 Shore D et 55 Shore D, tandis que la dureté de la matière de la deuxième zone (11) peut être par exemple comprise entre 38,5 Shore D et 70 Shore D, sachant que la différence de dureté des matière des deux zones est au minimum de 10 %.

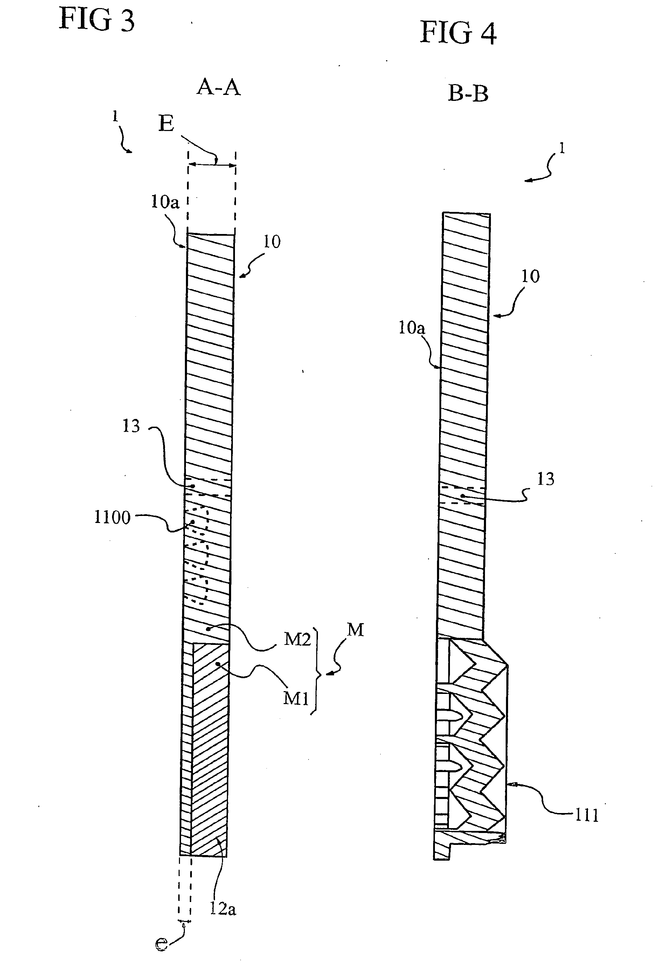

Telle que représentée à la figure 3, la plaque est constituée d'un matériau (M) de deux grades différents (A1,A2) bi injectés ou surmoulés entre eux. Le matériau choisi est avantageusement un seul matériau pour les deux zones, et est par exemple en élastomère du type polyuréthane (PU) ou polyétherblocs amides (PEBA).

Plus précisément, le surmoulage est réalisé de telle sorte à ce que le matériau avec le grade le plus faible soit chevauché par le grade le plus fort dans la zone des talons (12a,12b) (figure 3).

Tel qu'illustré, l'épaisseur de chevauchement (e) est égale au maximum au 1/3 de l'épaisseur (E) de la couche (10) principale de la plaque.

Selon le mode de réalisation préféré, la deuxième zone (11) de la surface distincte de celle des talons (12) est avantageusement réalisée en matériau transparent afin de pouvoir visualiser l'écoulement de la matière en dessous (10a) de ladite plaque fixée entre celle-ci et la voûte plantaire du pied (4) et destinée à constituer un coussinet de ferrage (5) pouvant avoir un grade de matière dans des zones différentes.

La deuxième zone (11) distincte de la zone des talons (12) est percée d'au moins un pré-trou de remplissage (13) du(des) matériau(x) constituant un coussinet (5). Le matériau choisi pour le mode de réalisation de la figure 1 est par exemple du silicone. Le remplissage est de préférence réalisé par injection, de façon à ce que le pré-trou (13) se referme une fois le remplissage fini, grâce à la souplesse du matériau.

La face du dessous (10a) de la zone distincte de celle des talons (12a,12b), destinée à être en regard de la voûte plantaire, comprend au moins un trou non débouchant (1100) en contre-dépouille afin de faciliter l'accrochage mécanique d'un coussinet (5) de ferrage.

Dans le mode de réalisation illustré et préféré, la plaque (1) comprend une pluralité de stries (111) réalisées, entre les deux parties (12a,12b) de la zone des talons (12), afin de favoriser l'écartement de ceux-ci lors des impacts au sol du pied ferré. Tel qu'illustré à la figure 4, les stries (111) forment une protubérance du côté opposé à celui de la voûte plantaire, la hauteur de cette protubérance étant avantageusement prévue pour ne pas dépasser celle du fer posé (2).

La plaque de ferrure (1) selon l'invention en prévoyant des zones distinctes à la dureté différente sur une couche confère des effets d'amortissement et de relance distincts en fonction des zones concernées : l'amortissement est beaucoup plus conséquent dans la zone des talons au moment du posé du pied ferré de l'animal en contact avec le so1 et la relance est beaucoup plus dynamique dans la zone (11) au niveau de l'avant du pied lors de la phase de propulsion de celui-ci.

La plaque de ferrure accompagne en quelque sorte le mouvement naturel du pied ferré de l'animal et lui apporte, outre sa fonction première de protection, un amortissement et une relance dynamique optimisés en fonction des zones sollicitées.

Bien entendu, l'invention n'est pas limitée aux modes de réalisation décrits et représentés à titre d'exemples, mais elle comprend aussi tous les équivalents techniques ainsi que leurs combinaisons. L'homme de l'art pourra ainsi aisément choisir tout type de matériau ou de mélange de matériaux permettant d'obtenir ces zones distinctes à la dureté différenciée.

## Revendications

1. Plaque de ferrure (1), destinée à être fixée entre un fer (2) et le sabot (3) d'un pied (4) d'animal, réalisée en au moins un matériau synthétique dont la surface recouvre celle du pied, la surface (10) comprenant deux zones (11, 12) de dureté différentes avec une première zone (12) correspondant à la zone dite « des talons » (12a, 12b) du pied et une deuxième zone (11) correspondant au reste de la surface du pied, **caractérisée en ce que** la deuxième zone (11) présente une dureté supérieure à celle de la première zone (12).

2. Plaque de ferrure (1) selon la revendication 1, **caractérisée en ce que** la différence de dureté entre les deux zones (11, 12) est d'au moins 10%.

3. Plaque de ferrure (1) selon la revendication 2, **caractérisée en ce que** la différence de dureté entre les deux zones (11, 12) est d'au moins 25%.

4. Plaque de ferrure (1) selon la revendication 2 ou 3, **caractérisée en ce que**, la dureté de la matière de la première zone (12a, 12b) est comprise entre 35 Shore D et 55 Shore D, tandis que la dureté de la matière de la deuxième zone (11) est comprise entre 38,5 Shore D et 70 Shore D.

5. Plaque de ferrure (1) selon l'une quelconque des revendications précédentes **caractérisée en ce qu'**elle est constituée d'un seul matériau de deux grades de dureté différents bi injectés ou surmoulés entre eux.

6. Plaque de ferrure (1) selon l'une quelconque des revendications précédentes, **caractérisée en ce que** le matériau est en élastomère du type polyuréthane (PU) ou polyétherblocs amides (PEBA).

7. Plaque de ferrure (1) selon la revendication 5 ou 6, **caractérisée en ce que** le surmoulage est réalisé de telle sorte à ce que le matériau avec le grade le plus faible soit chevauché par le grade le plus fort dans la zone des talons (12a,12b).

8. Plaque de ferrure (1) selon la revendication 7, **caractérisée en ce que** l'épaisseur de chevauchement (e) est égale au maximum au 1/3 de l'épaisseur (E) de la couche (10) principale de la plaque.

9. Plaque de ferrure (1) selon l'une quelconque des revendications précédentes, **caractérisée en ce que** la zone (11) distincte de celle des talons (12a,12b) est réalisée en matériau transparent afin de pouvoir visualiser l'écoulement de la matière en dessous de ladite plaque fixée entre le dessous de la plaque et la voûte plantaire du pied et destinée à constituer un coussinet de ferrage (5) pouvant avoir un grade de matière dans des zones différentes.

10. Plaque de ferrure (1) selon l'une quelconque des revendications précédentes, **caractérisée en ce que** la zone (11) distincte de celle des talons est percée d'au moins un pré-trou (13) de remplissage du(des) matériau(x) constituant un coussinet de ferrage.

11. Plaque de ferrure selon l'une quelconque des revendications précédentes, **caractérisée en ce que** la face du dessous (10a) de la plaque destinée à être en regard de la voûte plantaire, comprend au moins un trou non débouchant (1100) en contre-dépouille afin de faciliter l'accrochage mécanique d'un coussinet de ferrage (5).

12. Plaque de ferrure (1) selon l'une quelconque des revendications précédentes, **caractérisée en ce qu'**elle comprend une pluralité de stries (111) convergentes réalisées entre les deux parties (12a,12b) de la zone des talons, afin de favoriser l'écartement de ceux-ci lors des impacts au sol du pied ferré.

## Claims

1. Fitting plate (1), provided to be attached between a shoe (2) and the hoof (3) of an animal foot (4), made of at least one type of synthetic material whose surface covers the foot surface, the surface (10) comprising two areas (11, 12) exhibiting different hardnesses, with a first area (12) corresponding to the so-called heels area (12a, 12b) of the foot and a second area (11) corresponding to the remaining foot surface, **characterized in that** the second area (11) presents a hardness greater than that of the first area (12).

2. Fitting plate (1) according to claim 1, **characterized in that** the hardness difference between the two areas (11, 12) is at least 10%.

3. Fitting plate (1) according to claim 2, **characterized in that** the hardness difference between the two areas (11, 12) is at least 25%.

4. Fitting plate (1) according to claim 2 or 3, **characterized in that** the hardness of the material of the first area (12a, 12b) ranges between 35 Shore D and 55 Shore D, while the hardness of the material of the second area (11) ranges between 38,5 Shore D and 70 Shore D.

5. Fitting plate (1) according to any of the previous claims, **characterized in that** it is made of only one material of two different hardness grades bi-injected or molded from a casting with one another.

6. Fitting plate (1) according to any of the previous claims, **characterized in that** the material is of an elastomer of polyurethane (PU) or polyether-amide blocks (PEAB) type.

7. Fitting plate (1) according to claim 5 or 6, **characterized in that** the molding from a casting is realized in such a way that the material with the lowest grade is overlapped by the one with the higher grade in the heels area (12a, 12b).

8. Fitting plate (1) according to claim 7, **characterized in that** the overlap thickness (e) is at most equal to 1/3 of the thickness (E) of the main layer (10) of the plate.

9. Fitting plate (1) according to any of the previous claims, **characterized in that** the area (11) distinct from that of the heels (12a, 12b) is made of a transparent material in order to visualize the flow of the material below said plate, attached between the plate underside and the foot plantar arch, and provided to constitute a shoeing cushion (5) capable of having a material grade in different areas.

10. Fitting plate (1) according to any of the previous claims, **characterized in that** the area (11) distinct from the heels area is pierced by at least one pre-hole (13) for filling the material(s) constituting a shoeing cushion.

11. Fitting plate according to any of the previous claims, **characterized in that** the plate underside face (10a) intended to be facing the plantar arch, comprises at least one blind hole (1100) in undercut in order to facilitate the mechanical engaging of a shoeing cushion (5).

12. Fitting plate (1) according to any of the previous claims, **characterized in that** it comprises a plurality of convergent grooves (111) realized between the two parts (12a, 12b) of the heels area, in order to favor the spacing between these during the impacts on the ground of the shoed foot.

## Patentansprüche

1. Hufbeschlag (1), der dazu bestimmt ist, zwischen einem Eisen (2) und einem Huf (3) eines Fußes (4) eines Tieres befestigt zu werden, der aus mindestens einem synthetischen Material realisiert ist, dessen Oberfläche die des Fußes bedeckt, wobei die Oberfläche (10) zwei Zonen (11, 12) unterschiedlicher Härte aufweist, mit einer ersten Zone (12), die der als "Fersen" bezeichneten Zone (12a, 12b) des Fußes entspricht und mit einer zweiten Zone (11), die dem Rest der Oberfläche des Fußes entspricht, **dadurch gekennzeichnet, daß** die zweite Zone (11) eine Härte aufweist, die größer ist als die der ersten Zone (12).

2. Hufbeschlag (1) nach Anspruch 1, **dadurch gekennzeichnet, daß** die Differenz der Härte zwischen den zwei Zonen (11, 12) mindestens 10% beträgt.

3. Hufbeschlag (1) nach Anspruch 2, **dadurch gekennzeichnet, daß** die Differenz der Härte zwischen den zwei Zonen (11, 12) mindestens 25% beträgt.

4. Hufbeschlag (1) nach Anspruch 2 oder 3, **dadurch gekennzeichnet, daß** die Härte des Materiales der ersten Zone (12a, 12b) zwischen 35 Shore D und 55 Shore D liegt, während die Härte des Materiales der zweiten Zone (11) zwischen 38,5 Shore D und 70 Shore D liegt.

5. Hufbeschlag (1) nach irgendeinem der vorhergehenden Ansprüche, **dadurch gekennzeichnet, daß** er aus einem einzigen Material mit zwei unterschiedlichen Härtegraden besteht, die biinjektiert oder miteinander vergossen sind.

6. Hufbeschlag (1) nach irgendeinem der vorhergehenden Ansprüche, **dadurch gekennzeichnet, daß** das Material ein Elastomer des Typs Polyurethane (PU) oder Polyetherblockamid (PEBA) ist.

7. Hufbeschlag (1) nach den Ansprüchen 5 oder 6, **dadurch gekennzeichnet, daß** das Vergießen in der Art realisiert ist, daß das Material mit dem geringeren Härtegrad von dem mit größerem Härtegrad in der Zone der Fersen (12a, 12b) überdeckt ist.

8. Hufbeschlag (1) nach Anspruch 7, **dadurch gekennzeichnet, daß** die Dicke der Überdeckung (e) im Maximum gleich 1/3 der Dicke (E) der Hauptschicht (10) der Platte ist.

9. Hufbeschlag (1) nach irgendeinem der vorhergehenden Ansprüchen, **dadurch gekennzeichnet, daß** die Zone (11), die von der Fersen (12a, 12b) verschieden ist, aus einem transparenten Material ist, um den Fluß von Material unterhalb der genannten Platte zu visualisieren, das zwischen der Unterseite der Platte und dem Fußgewölbe des Fußes angebracht ist und dazu bestimmt ist, ein Hufbeschlagkissen (5) zu bilden, das einen Werkstoff in den unterschiedlichen Zonen hat.

10. Hufbeschlag (1) nach irgendeinem der vorhergehenden Ansprüche, **dadurch gekennzeichnet, daß** die Zonen (11), die von der Fersen verschieden ist, von mindestens einem Füllungsvorloch (13) für Material/Materialien durchbrochen ist, die ein Hufbeschlagkissen bilden.

11. Hufbeschlag nach irgendeinem der vorhergehenden Ansprüche, **dadurch gekennzeichnet, daß** die Unterseite (10a) der Platte, die dazu bestimmt ist, dem Fußgewölbe zugeordnet zu sein, mindestens ein Blindloch (1100) mit Hinterschneidung aufweist, um die mechanische Verankerung des Hufbeschlagkissens (5) zu erleichtern.

12. Hufbeschlag (1) nach irgendeinem der vorhergehenden Ansprüche, **dadurch gekennzeichnet, daß** er eine Vielzahl von konvergierenden Rillen (111) aufweist, die zwischen den beiden Teilen (12a, 12b) der Zone der Fersen vorhanden sind, um einen Abstand derselben während des Auftretens des beschlagenen Fußes auf dem Boden zu begünstigen.
